# EUROPEAN PATENT APPLICATION

(11) **EP 1 988 434 A1**
(43) Date of publication of application: **05.11.2008**
(21) Application number: 07251796.4
(22) Date of filing: 30.04.2007
(51) Int. Cl.: G04C 1/06, G04C 1/08, G04C 1/10

(54) **Hybrid power timing device**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A timing device of hybrid power that drives a movement of and functions as an auxiliary unit having a power supply to deliver power in time to an electro-magnetically driving unit through an automatic control unit manipulated by a mechanical kinetics storage status detection unit to produce mechanical kinetics; and a main spring barrel or a potential difference weight of the kinetics storage unit being driven to further drive a wheel chain of the timing device and automatically suspend driving upon the completion of winding the wheel train.

## Description

### BACKGROUND OF THE INVENTION

### (a) Field of the Invention

The present invention is related to a timing device of hybrid power, and more particularly, to one extends the operation time of a timing device by intermittently connecting a power wheel train in series to a conventional movement.

### (b) Description of the Prior Art:

Conventional timing device such as clock or a watch working either by automatic or manual winding usually relies upon a main spring barrel or a potential difference weight to store kinetics to drive a movement to tell time by vision and/or sound or to provide other mechanically driven functions. However, if the timing device is left unattended for a long time in case of an automatic winding, or is not wound again in time in case of manual winding up, the timing device will be forced to stop and the time must be reset once again.

### SUMMARY OF THE INVENTION

The primary purpose of the present invention is to provide a timing device of hybrid power that drives a movement of and functions as an auxiliary unit for the timing device. To achieve the purpose, electric power from a power supply is delivered in time to an electro-magnetically driving unit through an automatic control unit manipulated by a mechanical kinetics storage status detection unit to produce mechanical kinetics. Accordingly, a main spring barrel or a potential difference weight of the kinetics storage unit is driven to further drive a wheel chain of the timing device and automatically suspend driving upon the completion of winding the wheel train.

### BRIEF DESCRIPTION OF THE DRAWINGS

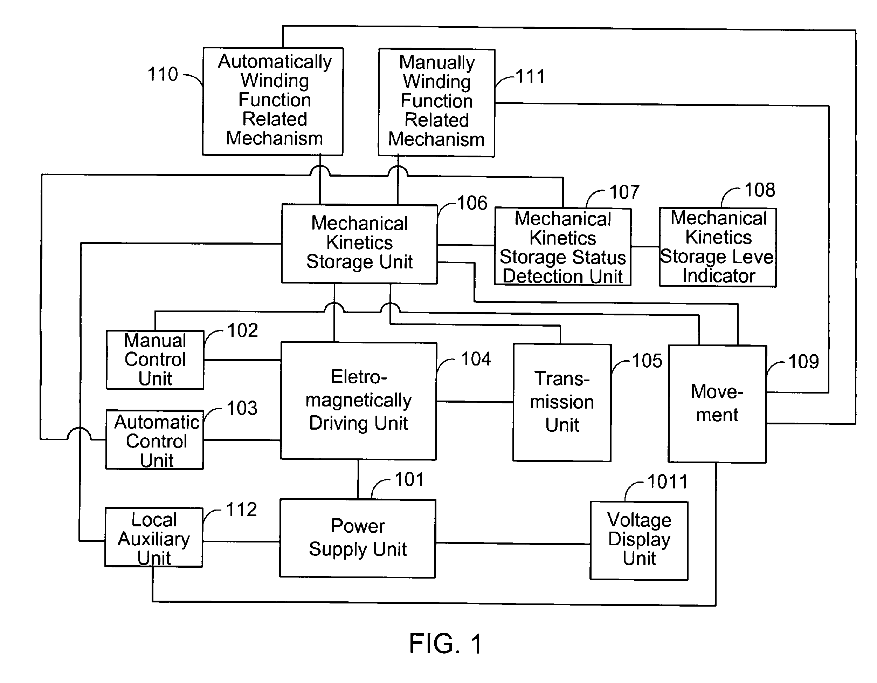

Fig. 1 is a block chart showing the construction of the present invention.

### DETAILED DESCRIPTION OF THE PREFERRED EMBODIMENTS

The present invention relates to a timing device of hybrid power. Wherein, the power winding for the wheel train operates on the power stored from sources including battery or capacitor, city power, or any other type of power source, or the power converted from oscillation potentials created when the timing device is moved; or the power converted from ambient temperature and optical energy to the timing device and accumulated by means of an energy storage device, such as a rechargeable battery, capacity, or ultra capacity. The power is then utilized in any of the following means:
(1) A manual control unit is provided to operate a dynamoelectric switch by pressing, pulling, dialing, turning or any other means; or touch control is executed by means of touch, optics or electromagnetism, or capacitor detection related electronic switch circuit device; or a audio, optics, electro-magnetic wave related circuit device is provided for remote control at random of the power winding related mechanism in starting or stopping power winding; or
(2) A mechanical kinetics storage status detection unit and an automatic control unit to control winding wheel train related mechanism are provided to deliver in time the power to enable winding a main spring barrel or a potential difference weight of a mechanic kinetics storage unit driven by as driven by mechanical kinetics produced from a electric motor or an electro-magnetic drive unit, and to automatically stop driving upon the completion of the winding operation;
(3) Either of those two power winding control structures described in the preceding paragraphs (1) and (2) can be provided at the same time with a conventional structure of manual winding structure or with a top actuated automatic winding structure; or with both of the manual winding structure and the top actuated automatic winding structure at the same time.

Fig. 1 illustrates an operating block chart of the construction of the present invention. Whereas the present invention involves dynamo-electric integration and there are too many applicable structures without changing the system function; therefore, it is illustrated in a block chart. Other than conventional case accessories, movement and its related accessories, as desired, operational beeper working on mechanical or electric energy, or movable performance device or any other device driven by mechanical power, electric motor or electro-magnetic force; or a beeping or lighting electronic circuit, or an information, communication, or multi-media A/V and lighting display unit may be provided to accept the control by the movement. The present invention is essentially comprised of the following units:
--- a power supply unit 101: related to a DC electric storage device comprised of a disposable battery, a rechargeable battery, or a capacity or an ultra capacity; or a solar cell that converts optical power into electric power; or a device that converts thermal energy into electric power; or a dynamo-electric device that converts oscillation potential into electric power adapted to a matching electric storage device; or an AC source; and an optional voltage display unit 1011 may be provided to the power supply unit 101 as desired;
   While supplying power to execute power winding, electric power from the power supply unit 101 is capable of supplying power to other power-driven load, e.g., audio, lighting, or information, communication, or multi-media A/V and lighting display unit, or other electronic, power motor, or electro-magnetic force driven performance device or any other device;
--- a manual control unit 102: related to a dynamo-electric or a solid-state electronic switch to operate the dynamo-electric switch by pressing, pulling, dialing, turning or other means; or to control by touch with an electronic switch circuit device operating by touch, optical, pulsation, or capacity sensor; or to execute remote control by means of audio, optical, electro-magnetic wave related circuit device to transport the power from the local power supply unit 101 to a electro-magnetically driving unit 104 to be described below, thus to directly drive or drive through a transmission unit 105 to be described below a mechanical kinetics storage unit 106 to be described below to increase power storage for executing or stopping power winding drive function; and the manual control unit 102 is an optional item to be provided as desired;
   For example, the manual control unit 102 becomes a must with a mechanical storage timing device allowing power winding when provided with manual control winding function; and becomes an optional item with a mechanical storage timing device allowing power winding when provided with an automatic control unit 103 to be described below to provide automatic winding function;
--- an automatic control unit 103: related to a dynamo-electric or solid-state electronic device subject to the control by a mechanical kinetics storage status detection unit 107 to be described below further controls the operation of the power supply unit 101 on the electro-magnetically driving unit 104; so to drive the mechanical kinetics storage unit 106 to increase storage level once the power level drops under a present value and to stop the operation of the electro-magnetically driving unit 104 for stopping the winding. The automatic control unit 103 to be provided when an automatic power winding function is provided, or may be provided as desired when the manual control unit 102 is selected for executing manually controlled winding;
--- an electro-magnetically driving unit 104: related to an AC or DC, synchronous or asynchronous, brush or brushless circulating motor or a linear motor that converts electric power into circulation kinetics or linear potential kinetics, or that converts electric power into step kinetics, or that converts electric power into reciprocal potential kinetics; or related to a solenoid or a step motor or a reciprocally driving electro-magnetic actuation device that converts electric power to mechanical potential *kinetics,* or to an electro-magnetic device that is further provided with the function of setting up the torque for directly driving the main spring barrel or the weight from the mechanical kinetics storage unit 106;
--- a transmission unit 105: related to a gear, connection rod, or one-way transmission, or a clutch, or a torque control device, or a transmission direction control device, or a mechanical, electro-mechanical, or a solid-state electronic power switch that allows torque setup; or a mechanical or electro-mechanical clutch that allows torque setup; or any other transmission or mechanism that is capable of transmitting mechanical potential kinetics, or varying revolution speed ratio or direction so to increase the power storage for the mechanical kinetics storage unit 106 with the mechanical potential kinetics from the electro-magnetically driving unit 104 by varying the revolution speed ratio or direction, or by executing clutching control of the transmission, or by limiting the torque, or by limiting the direction of transmission to the mechanical potential kinetics of the electro-magnetically driving unit 104 as elected;
   The transmission unit 105 as an optional item may not be provided to leave the electro-magnetically driving unit 104 to directly drive the mechanical kinetics storage unit 106;
--- a mechanical kinetics storage unit 106: is comprised of a main spring barrel or a potential difference weight and its related winding mechanism to release kinetics to drive transmission of a movement 109 to be described below while receiving and converting electric power supplied by the electro-magnetically driving unit 104 to mechanical potential kinetics to wind the wheel train of the movement 109;
   As applicable, the mechanical kinetics storage unit 106 may be further adapted with automatic winding related mechanism; or adapted with an automatically winding function related mechanism 110 and/or a manually winding function related mechanism 111 to be described below.
--- a mechanical kinetics storage status detection unit 107: related to a detection unit comprised of mechanical, electro-mechanical, or solid-state electronic device, or any other device that is capable of directly detecting the storage level of the mechanical kinetics storage unit 106; or to a detection unit that measures angular displacement or line displacement indicated depending on the storage status of the mechanical kinetics storage unit 106; or that executes location detection or spring load pressure detection to indirectly detect the storage status of the mechanical kinetics storage unit 106 before converting the detection results into analog or digital message of the power level or the potential detection message to be fed back to the automatic control unit 103 or to be displayed by a mechanical kinetics storage level indicator 108 to be described below;
   Furthermore, the storage status of the mechanical kinetics storage unit 106 may be indirectly detected by measuring the driving amperage of the electro-magnetically driving unit 104 in the winding drive process in relation to that of the mechanical kinetics storage unit 106 for the detection results to be fed back to the automatic control unit 103 or for display of the mechanical kinetics storage status;
   The mechanical kinetics storage status detection unit 107 relates to an optional item and may not be provided in case of the winding function is subject to the manual control unit 102;
--- a mechanical kinetics storage level indicator 108: related to an optional item of a dynamo-electric, or solid-state electronic, or mechanical analog or digital display unit to receive detection signals sent from the mechanical kinetics storage status detection unit 107 for the display of the storage status of the mechanical kinetics storage unit 106;
--- a movement 109: related to a movement of a clock, pocket watch or wrist watch operating on a main spring barrel or a potential difference weight to tell, display and set the time; or is further adapted with an optional item of control mechanisms for a device of audio time telling, or movable performance device or any other device;
   The movement 109 may be provided with an automatically winding function related mechanism 110 and/or a manually winding function related mechanism 111;
--- a local auxiliary unit 112: including an optional item of a beeping device relying upon mechanical force or electric power as its energy source, or a movable performance device or any other device driven by mechanical force or electric motor or electro-magnetic force; or a light, audio and/or video display device working on electronic circuit to emit sound, light, information, communication or multi-media subject to the control by the movement; wherein, the local auxiliary unit 112 may be made standing alone or sharing the same construction with the movement 109.

The timing device of hybrid power operates as follows:
1. In case of actuation by power winding operation:
   (1) The manual control unit 102 operated by manual controls the operation of the dynamo-electric switch by pressing, pulling, dialing or turning; or the control is done with an electronic switch circuit by touch, optics or electro-magnetic or capacity sensor; or the remote control is done with a voice control, optical control and electro-magnetic wave control circuit device to provide remote control at random for driving the electro-magnetically driving unit 104 before directly driving or indirectly driving through the transmission unit 105 the mechanical kinetics storage unit 106 to increase the storage for winding the wheel chain of the timing device; or
   (2) By utilizing the mechanical kinetics storage status detection unit 107 comprised of a mechanical, electro-mechanical, or solid-state electronic device allowing location detection to confirm the displacement or pressure value produced by the mechanical kinetics storage unit 106 when its storage level drops below the preset value , thus to control the automatic control unit 103, and further to control the electric power from the power supply unit 101 for driving the electro-magnetically driving unit 104 to increase the storage to wind the wheel train; or
   (3) The operation is done by combination of two means originated from either of those two winding actuation methods described in the preceding subparagraphs (1) or (2).
2. The operation of stopping the power winding is provided as follows:
   (1) The electro-magnetically driving unit 104 comprised of a motor that allows torque setup is provided to drive the mechanical kinetics storage unit 106 to execute the winding drive for increasing the storage; once the drive torque required gradually increases when more kinetics are supplied from the mechanical kinetics storage unit 106 for the electro-magnetically driving unit 104 to reach the preset torque, the electro-magnetically driving unit 104 stops driving the mechanical kinetics storage unit 106 for avoiding excessive winding of the wheel train; or
   (2) The electro-magnetically driving unit 104 comprised of a motor with its torque and driving current indicating relative variation operates by setting and detecting the drive current when the mechanical kinetics storage unit 106 is driving for winding the wheel train to indirectly detect its torque and stop its drive for preventing excessive winding of the wheel train; or
   (3) The manual control unit 102 operating by manual controls the dynamo-electric switch, or operates by contact the contact electronic switch device, or by executing remote control by means of a sound, optical or electro-magnetic wave control related circuit to stop the electro-magnetically driving unit 104 for preventing excessive winding of the wheel train; or
   (4) The transmission unit 105 disposed between the electro-magnetically driving unit 104 and the mechanical kinetics storage unit 106 functions as a mechanical or electro-mechanical clutch that allows torque to set up the clutch to automatically disengage or produce slide when the torque increases up to the preset value upon completing the winding so to prevent excessive winding of the wheel train; or
   (5) The mechanical kinetics storage status detection unit 107 comprised of a mechanical or dynamo-electric or solid-state electronic capable of location detection device cuts off the power supply to stop the drive by the electro-magnetically driving unit 104 when the storage unit moves to where the completion of the winding as detected by the location detection device or the pressure value of the storage device reaches the preset value for the completion of the winding to prevent excessive winding of the wheel train; or
   (6) The electro-magnetically driving unit 104 executes open loop, semi-open loop, or closed loop scaling and cuts off the power supplied to the electro-magnetically driving unit 104 when the scaling value reaches the preset value.

In practice, the operation of stopping the winding of the wheel train may be executed using one or a plurality of those methods described in those six methods described above.

Those operations to actuate winding as described in the preceding paragraph 1, and those operations to stop the winding when the winding is completed as described in the preceding paragraph 2 may be combined as desired to execute power winding and stop the winding.

The power winding control construction of the present invention when applied may be further comprised of either or both of the power winding related mechanism and the automatic winding functions and the manual winding structure.

To facilitate manufacturing, application and portability, all the associate units and mechanisms of the timing device of the present invention may be made integrated in one piece, or in separate structures that allow incorporation by means of coupling transmission devices.

The present invention by incorporating power winding mechanical storage timing device to upgrading the performance of the mechanical timing device among diversified production families of mechanical timing device and quartz timing device has definite functions and innovative creativity; therefore, this application for a patent is duly filed accordingly.

## Claims

1. A timing device of hybrid power with the power winding for the wheel train operating on the power stored from source including battery or capacitor, city power, or any other type of power source, or the power converted from oscillation potentials created when the timing device is moved; or the power converted from ambient temperature and optical energy to the timing device and accumulated by means of an energy storage device, such as a rechargeable battery, capacity, or ultra capacity, through a mechanical kinetics storage status detection unit and an automatic control unit to control winding wheel train related mechanism are provided to deliver in time the power to enable winding a main spring barrel or a potential difference weight of a mechanic kinetics storage unit driven by as driven by mechanical kinetics produced from a electric motor or an electro-magnetic drive unit, and to automatically stop driving upon the completion of the winding operation; other than conventional case accessories, movement and its related accessories, as desired, operational beeper working on mechanical or electric energy, or movable performance device or any other device driven by mechanical power, electric motor or electro-magnetic force; or a beeping or lighting electronic circuit, or an information, communication, or multi-media A/V and lighting display unit may be provided to accept the control by the movement; is essentially comprised of the following units:
--- a power supply unit 101: related to a DC electric storage device comprised of a disposable battery, a rechargeable battery, or a capacity or an ultra capacity; or a solar cell that converts optical power into electric power; or a device that converts thermal energy into electric power; or a dynamo-electric device that converts oscillation potential into electric power adapted to a matching battery; or an AC source; and an optional voltage display unit 1011 may be provided to the power supply unit 101 as desired;
While supplying power to execute power winding, electric power from the power supply unit 101 is capable of supplying power to other power-driven load, e.g., audio, lighting, or information, communication, or multi-media A/V and lighting display unit, or other electronic, power motor, or electro-magnetic force driven performance device or any other device;
--- a manual control unit 102: related to a dynamo-electric or a solid-state electronic switch to operate the dynamo-electric switch by pressing, pulling, dialing, turning or other means; or to control by touch with an electronic switch circuit device operating by touch, optical, pulsation, or capacity sensor; or to execute remote control by means of audio, optical, electro-magnetic wave related circuit device to transport the power from the local power supply unit 101 to a electro-magnetically driving unit 104 to be described below, thus to directly drive or drive through a transmission unit 105 to be described below a mechanical kinetics storage unit 106 to be described below to increase power storage for executing or stopping power winding drive function; and the manual control unit 102 is an optional item to be provided as desired;
For example, the manual control unit 102 becomes a must with a mechanical storage timing device allowing power winding when provided with manual control winding function; and becomes an optional item with a mechanical storage timing device allowing power winding when provided with an automatic control unit 103 to be described below to provide automatic winding function;
--- an automatic control unit 103: related to a dynamo-electric or solid-state electronic device subject to the control by a mechanical kinetics storage status detection unit 107 to be described below further controls the operation of the power supply unit 101 on the electro-magnetically driving unit 104; so to drive the mechanical kinetics storage unit 106 to increase storage level once the power level drops under a present value and to stop the operation of the electro-magnetically driving unit 104 for stopping the winding. The automatic control unit 103 to be provided when an automatic power winding function is provided, or may be provided as desired when the manual control unit 102 is selected for executing manually controlled winding;
--- an electro-magnetically driving unit 104: related to an AC or DC, synchronous or asynchronous, brush or brushless circulating motor or a linear motor that converts electric power into circulation kinetics or linear potential kinetics, or that converts electric power into step kinetics, or that converts electric power into reciprocal potential kinetics; or related to a solenoid or a step motor or a reciprocally driving electro-magnetic actuation device that converts electric power to mechanical potential kinetics, or to an electro-magnetic device that is further provided with the function of setting up the torque for directly driving the main spring barrel or the weight from the mechanical kinetics storage unit 106;
--- a transmission unit 105: related to a gear, connection rod, or one-way transmission, or a clutch, or a torque control device, or a transmission direction control device, or a mechanical, electro-mechanical, or a solid-state electronic power switch that allows torque setup; or a mechanical or electro-mechanical clutch that allows torque setup; or any other transmission or mechanism that is capable of transmitting mechanical potential kinetics, or varying revolution speed ratio or direction so to increase the power storage for the mechanical kinetics storage unit 106 with the mechanical potential kinetics from the electro-magnetically driving unit 104 by varying the revolution speed ratio or direction, or by executing clutching control of the transmission, or by limiting the torque, or by limiting the direction of transmission to the mechanical potential kinetics of the electro-magnetically driving unit 104 as elected;
The transmission unit 105 as an optional item may not be provided to leave the electro-magnetically driving unit 104 to directly drive the mechanical kinetics storage unit 106;
--- a mechanical kinetics storage unit 106: is comprised of a main spring barrel or a potential difference weight and its related winding mechanism to release kinetics to drive transmission of a movement 109 to be described below while receiving and converting electric power supplied by the electro-magnetically driving unit 104 to mechanical potential kinetics to wind the wheel train of the movement 109;
As applicable, the mechanical kinetics storage unit 106 may be further adapted with automatic winding related mechanism; or adapted with an automatically winding function related mechanism 110 and/or a manually winding function related mechanism 111 to be described below;
--- a mechanical kinetics storage status detection unit 107: related to a detection unit comprised of mechanical, electro-mechanical, or solid-state electronic device, or any other device that is capable of directly detecting the storage level of the mechanical kinetics storage unit 106; or to a detection unit that measures angular displacement or line displacement indicated depending on the storage status of the mechanical kinetics storage unit 106; or that executes location detection or spring load pressure detection to indirectly detect the storage status of the mechanical kinetics storage unit 106 before converting the detection results into analog or digital message of the power level or the potential detection message to be fed back to the automatic control unit 103 or to be displayed by a mechanical kinetics storage level indicator 108 to be described below;
Furthermore, the storage status of the mechanical kinetics storage unit 106 may be indirectly detected by measuring the driving amperage of the electro-magnetically driving unit 104 in the winding drive process in relation to that of the mechanical kinetics storage unit 106 for the detection results to be fed back to the automatic control unit 103 or for display of the mechanical kinetics storage status;
The mechanical kinetics storage status detection unit 107 relates to an optional item and may not be provided in case of the winding function is subject to the manual control unit 102;
--- a mechanical kinetics storage level indicator 108: related to an optional item of a dynamo-electric, or solid-state electronic, or mechanical analog or digital display unit to receive detection signals sent from the mechanical kinetics storage status detection unit 107 for the display of the storage status of the mechanical kinetics storage unit 106;
--- a movement 109: related to a movement of a clock, pocket watch or wrist watch operating on a main spring barrel or a potential difference weight to tell, display and set the time; or is further adapted with an optional item of control mechanisms for a device of audio time telling, or movable performance device or any other device;
The movement 109 may be provided with an automatically winding function related mechanism 110 and/or a manually winding function related mechanism 111;
--- a local auxiliary unit 112: including an optional item of a beeping device relying upon mechanical force or electric power as its energy source, or a movable performance device or any other device driven by mechanical force or electric motor or electro-magnetic force; or a light, audio and/or video display device working on electronic circuit to emit sound, light, information, communication or multi-media subject to the control by the movement; wherein, the local auxiliary unit 112 may be made standing alone or sharing the same construction with the movement 109.

2. A timing device of hybrid power of Claim 1, wherein the actuation of its power winding includes having the manual control unit 102 operated by manual controls the operation of the dynamo-electric switch by pressing, pulling, dialing or turning; or the control is done with an electronic switch circuit by touch, optics or electro-magnetic or capacity sensor; or the remote control is done with a voice control, optical control and electro-magnetic wave control circuit device to provide remote control at random for driving the electro-magnetically driving unit 104 before directly driving or indirectly driving through the transmission unit 105 the mechanical kinetics storage unit 106 to increase the storage for winding the wheel chain of the timing device.

3. A timing device of hybrid power of Claim 1, wherein he actuation of its power winding includes having the mechanical kinetics storage status detection unit 107 comprised of a mechanical, electro-mechanical, or solid-state electronic device allowing location detection to confirm the displacement or pressure value produced by the mechanical kinetics storage unit 106 when its storage level drops below the preset value, thus to control the automatic control unit 103, and further to control the electric power from the power supply unit 101 for driving the electro-magnetically driving unit 104 to increase the storage to wind the wheel train.

4. A timing device of hybrid power of Claim 1, wherein the operation of power winding includes the combination of Claim 2 and Claim 3.

5. A timing device of hybrid power of Claim 1, wherein the stopping operation upon the completion of the power train includes having the electro-magnetically driving unit 104 comprised of a motor that allows torque setup is provided to drive the mechanical kinetics storage unit 106 to execute the winding drive for increasing the storage; once the drive torque required gradually increases when more kinetics are supplied from the mechanical kinetics storage unit 106 for the electro-magnetically driving unit 104 to reach the preset torque, the electro-magnetically driving unit 104 stops driving the mechanical kinetics storage unit 106 for avoiding excessive winding of the wheel train.

6. A timing device of hybrid power of Claim 1, wherein the stopping operation upon the completion of the power train includes the use of the electro-magnetically driving unit 104 comprised of a motor with its torque and driving current indicating relative variation to operate by setting and detecting the drive current when the mechanical kinetics storage unit 106 is driving for winding the wheel train to indirectly detect its torque and stop its drive for preventing excessive winding of the wheel train.

7. A timing device of hybrid power of Claim 1, wherein the stopping operation upon the completion of the power train includes the use of the manual control unit 102 operating by manual controls the dynamo-electric switch, or operates by contact the contact electronic switch device, or by executing remote control by means of a sound, optical or electro-magnetic wave control related circuit to stop the electro-magnetically driving unit 104 for preventing excessive winding of the wheel train.

8. A timing device of hybrid power of Claim 1, wherein the stopping operation upon the completion of the power train includes the use of the transmission unit 105 disposed between the electro-magnetically driving unit 104 and the mechanical kinetics storage unit 106 functions as a mechanical or electro-mechanical clutch that allows torque to set up the clutch to automatically disengage or produce slide when the torque increases up to the preset value upon completing the winding so to prevent excessive winding of the wheel train.

9. A timing device of hybrid power of Claim 1, wherein the stopping operation upon the completion of the power train includes the use of the mechanical kinetics storage status detection unit 107 comprised of a mechanical or dynamo-electric or solid-state electronic capable of location detection device to cut off the power supply to stop the drive by the electro-magnetically driving unit 104 when the storage unit moves to where the completion of the winding as detected by the location detection device or the pressure value of the storage device reaches the preset value for the completion of the winding to prevent excessive winding of the wheel train.

10. A timing device of hybrid power of Claim 1, wherein the stopping operation upon the completion of the power train includes having the electro-magnetically driving unit 104 to execute open loop, semi-open loop, or closed loop scaling and cuts off the power supplied to the electro-magnetically driving unit 104 when the scaling value reaches the preset value.

11. A timing device of hybrid power of Claim 1, wherein the stopping operation upon the completion of the power train includes one or a plurality of those methods of Claims 5, 6, 7, 8, 9, and 10.

12. A timing device of hybrid power of Claim 1, wherein the power winding control construction of the present invention when applied may be further comprised of either or both of the power winding related mechanism and the automatic winding functions and the manual winding structure.

13. A timing device of hybrid power of Claim 11, wherein all the associate units and mechanisms of the timing device of the present invention may be made integrated in one piece, or in separate structures that allow incorporation by means of coupling transmission devices.

14. A timing device of hybrid power of Claim 1, wherein the electric energy storage unit is also capable of supplying power to other power-driven load, e.g., audio, lighting, or information, communication, or multi-media A/V and lighting display unit, or other electronic, power motor, or electro-magnetic force driven performance device or any other device.

15. A hybrid powered timing device for driving the movement of a timepiece via a winding device, the timing device comprising a power supply unit for delivering power to the winding device via an electromagnetic drive unit and a kinetic energy storage unit, the arrangement being such that the kinetic energy storage device delivers kinetic energy to drive the winding device until the winding device is fully wound.
